Europäisches Patentamt

European Patent Office

Office européen des brevets

(19)

(11) **EP 0 993 092 A2**

(12) **EUROPEAN PATENT APPLICATION**

(43) Date of publication:
**12.04.2000 Bulletin 2000/15**

(51) Int Cl.7: **H02H 3/093**, H02H 7/30

(21) Application number: **99306238.9**

(22) Date of filing: **06.08.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **06.10.1998 GB 9821646**

(71) Applicant: **Hampson, John**
**Chester CH3 5XH (GB)**

(72) Inventor: **Hampson, John**
**Chester CH3 5XH (GB)**

(54) **Overcurrent protection with a voltage-controlled time-multiplier**

(57)    An overcurrent relay for protecting electricity distribution networks having a time-multiplier setting that is derived as a function of the system voltage to improve discrimination and can be used to permit inter-connected operation of the distribution network.

## Figure 2: Proposed Distribution System

EP 0 993 092 A2

## Description

This invention relates to overcurrent relays used for the protection of electricity distribution networks.

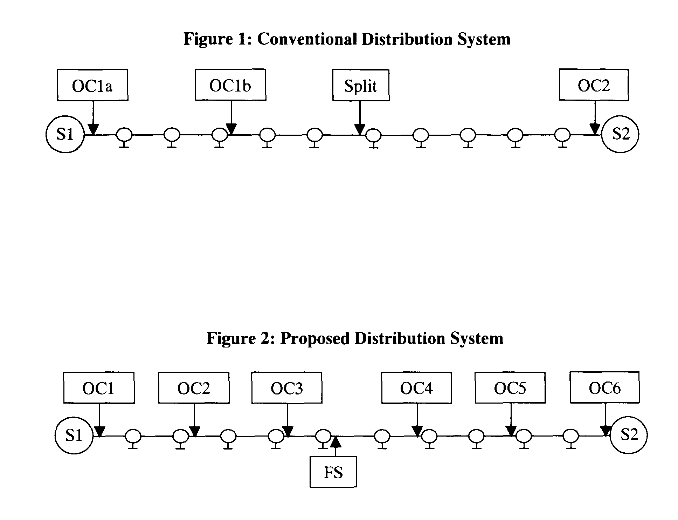

Electricity is typically distributed at medium voltage (MV) and transformed down to low voltage (LV) at substations that are located near to customer supply points. An MV distributor will have several substations connected along its length and will usually have alternate infeeds from one or more sources for security purposes (see figure 1). This permits supplies to be maintained in the event of a fault affecting the normal infeed.

Overcurrent protection relays are arranged to monitor the distributors current and operate according to a defined timing characteristic if it exceeds a pre-set threshold. Standard timing is based on definite-time or inverse-time characteristics. Provision is included to set the current threshold and a time-multiplier to adjust the operating time. Variations include directional overcurrent relays, which only operate for a particular current polarity and voltage-biased overcurrent relays, in which the operating threshold is modified by the system voltage.

Protection systems and circuit breakers are installed at strategic locations along the distributor for the purpose of detecting faults that cause excess current to flow and to automatically disconnect them from the source infeeds. This prevents further damage to the network but also disconnects customer supplies in the process. Security requirements often dictate that further isolation points are provided along the distributor to disconnect only the faulty section and permit supply restoration to customers from the alternate infeeds. Manual operations are usually required to isolate the faulty section and this can take several hours during which time many customers are without electricity.

Figure 1 shows two source infeeds S1 and S2, each supplying a chain of substations up to a split located near the middle of the circuit, where an isolation point is open. The two infeeds might originate in the same substation or in two neighbouring substations. Each circuit is protected at the source using an overcurrent relay (OC1a and OC2) arranged to open the source circuit breaker. In addition, in this example, the distributor fed from S1 has a second overcurrent relay OC1b controlling a circuit breaker part way along its length and this is typically arranged to operate before OC1a when a fault occurs downstream of its position (i.e. between OC1b and Split). This "time grading" technique is often used to minimise the number of customers disconnected when isolating a fault since it avoids supplies between OC1a and OC1b being disconnected for a fault beyond OC1b. Time grading requires relays to have progressively faster time-multiplier settings according to the physical position of the relay along the circuit and this restriction prevents interconnected operation.

The majority of Electricity Companies operate "split" networks as shown in figure 1. A few employ different arrangements that permit the alternate infeed to be permanently connected in parallel with the normal infeed and arranged so that only a small section of the circuit is disconnected if a fault occurs. Such systems are often described as "interconnected" because they operate without the normal split point. This can reduce the number of customers affected by the fault but require more sophisticated protection, control and switchgear arrangements. Most significantly the protection and control systems generally require communications along the feeder to synchronise operations and these can be costly if not installed at the same time as the main electricity cables.

An overcurrent relay usually has a well-defined current/time characteristic and a facility to adjust the current threshold setting. A typical relay used in practice would have an Inverse Definite Minimum Time (IDMT) characteristic that, in addition to operating faster for higher values of fault current also has a definite minimum operating time of 2 seconds. To facilitate time grading these relays also have a "time-multiplier" setting that modifies the operating time by a <u>fixed factor.</u> For instance a setting of 0.5 (or *50%)* would reduce the operating time by half and the definite minimum time to 1 second.

The number of customers affected by a fault can be reduced further if additional relays and circuit breakers are installed along the feeder, since this provides better security for customers nearer to the source. In practice it is difficult to add sufficient relays because a fixed time margin is required to take account of practical issues, including the operating time of circuit breakers, overshoot of the overcurrent relay and various measuring and timing errors in transducers and relays. This time margin accumulates to the point where relays located near to the source have an unacceptably long operating time that risks damage to the network. As a result it is only feasible to "time-grade" a limited number of overcurrent relays along a feeder and only two or three are graded in practice.

Supply security could be improved if the feeder was operated interconnected with extra relays arranged so that only the faulty section between adjacent relays was disconnected. Conventional overcurrent relays have a fixed time-multiplier that is set according to their physical position along the feeder and which cannot grade successfully if the position of the fault is not known beforehand. An arrangement that automatically adjusts the time-multiplier for relays located nearer to the fault position would overcome this problem.

According to the present invention there is provided an overcurrent relay having a time-multiplier setting which is adjusted as a proportion of the applied voltage and current according to the expression: -

$$Tm = \left[ \left( \frac{V}{1 - IZ} \right) \times K \right] + Dt$$

Where

Tm =   the effective time-multiplier setting.
V =    the per-unit system voltage.
I =    the relay operating current.
Z =    a user applied setting to represent impedance external to the distributor.
K =    a user applied fixed-multiplier setting.
Dt =   a user applied definite minimum setting.

This has the important advantage that it can also be applied to circuits that are fed from two or more sources operating in parallel and still provide discriminative protection in many cases that will disconnect a minimum section of the network. This permits a new network configuration to be proposed, using an interconnected arrangement, but which does not require communication facilities for its basic operation.

Normal time grading provides discrimination based on the relay's current sensitivity, its timing curve and a fixed time-multiplier setting. It is proposed here that the relay time-multiplier (Tm) be a variable which, in simplest terms might represent the per-unit value of the system voltage associated with an overcurrent relay element. Under these circumstances it would have the effect of reducing the relay time-multiplier in sympathy with the system voltage, so that if V = 50% then the relay would operate in half the normal time. It is self-evident that relays nearest the fault position will experience the lowest voltage and will operate first if all relays have similar settings.

The voltage (V) used in the algorithm would depend on the circumstances of the application but in most cases would be derived directly from the distributor's voltage. Using the MV system voltage would require a suitable measuring transducer and this might prove too expensive. An alternative arrangement might obtain a value for V from the local LV system. This could be derived from the local power transformer that would typically have a delta-star winding configuration that prevents evaluation of the MV phase-earth voltage. In these circumstances an alternate related value may be chosen, for instance the calculated positive or negative phase sequence value ($V_{pps}$ or $V_{nps}$) derived from the LV system voltage plus the voltage drop through the power transformer. The voltage drop can be calculated from the transformer impedance multiplied by its current with an appropriate phase shift added. In these circumstances the relay voltage V might be obtained from $V_{pps}$ or ($1-2V_{nps}$). The use of positive and negative sequence voltages would be less efficient than using the MV phase voltage but avoids the requirement for an MV voltage transducer.

The term (1-IZ) in the algorithm provides compensation for the per-unit voltage drop due to external impedance (such as the source impedance) and Z would be set to include this. For earth-fault relays it might also be set to accommodate network-earthing impedance. The K term is comparable to a conventional time-multiplier setting and Dt provides a minimum operating time to allow fast downstream protection to operate first (e.g. fuses).

Figure 2 shows how such a voltage grading relay, in conjunction with an optional Feeder Split (FS) relay, can be used to improve network performance. The MV circuit is operated interconnected and has, in this example, six overcurrent relays each having a voltage grading characteristic in accordance with the proposed algorithm. In place of the normal split a Feeder Split relay (FS) is added which detects if the fault current is too small to permit voltage grading and will temporarily split the circuit to allow conventional current grading. This relay will have a "low-set overcurrent element" set to grade with all other relays at low current values and which will split the MV feeder to permit conventional current/time grading. In addition it will have a "high-set overcurrent element", above which voltage grading is expected to operate successfully, and this element will block the operation of the low set element to prevent the feeder becoming split. Most faults would be expected to operate the high-set element for the scheme to be considered viable.

For heavy fault currents, exceeding the FS high-set value, relays will typically operate according to their timing curve and will grade according to their voltage-controlled time-multipliers. Assuming all relays (other than FS) have the same settings then the two nearest to the fault should operate first. In practice some measuring accuracy problems might arise which prevents this from happening in all cases. Nevertheless, even if two adjacent relays failed to discriminate properly there should still be a tendency for relays nearer the fault to operate more quickly and this will tend to minimise the size of the disconnected zone.

**Claims**

1. An overcurrent relay having a time-multiplier setting which is calculated as a proportion of the system voltage according to the expression: -

$$Tm = \left[ \left( \frac{V}{1 - IZ} \right) \times K \right] + Dt$$

Where

**EP 0 993 092 A2**

Tm = the effective time-multiplier setting.
V = the per-unit system voltage.
I = the relay operating current.
Z = a user applied setting to represent impedance external to the distributor.
K = a user applied fixed-multiplier setting.
Dt = a user applied definite minimum setting.

**Figure 1: Conventional Distribution System**

**Figure 2: Proposed Distribution System**